# EUROPEAN PATENT APPLICATION

(11) **EP 1 625 939 A2**
(43) Date of publication of application: **15.02.2006**
(21) Application number: 05254907.8
(22) Date of filing: 05.08.2005
(51) Int. Cl.: B41J 2/16

(54) **Forming features in printhead components**

(30) Priority: 10.08.2004 US 915510
(71) Applicant: Hewlett-Packard Development Company, L.P., Houston, Texas 77070 (US)
(72) Inventor: Tan, Kee Cheong, Singapore 266467 (SG); Zhan, Ping, Singapore 102103 (SG); Sun, Jiansan, Singapore 680421 (SG); Gu, Jianhui, Corvallis Oregon 97330-4239 (US)
(74) Representative: Powell, Stephen David

(57) **Abstract**

In a method of forming a feature in a printhead component, femtosecond laser beam pulses are scanned over a target zone of a printhead substrate to remove a layer of the printhead substrate. The scanning is repeated until a depth of printhead substrate has been removed from the target zone which corresponds to a desired feature depth. The removed portion of the printhead substrate forms at least part of the feature in the printhead component.

## Description

The present invention relates generally to printhead components and more particularly, to a method for forming features in printhead components.

Inkjet printers eject droplets of ink or colorant onto a printable surface to reproduce or generate an image. Typically, a printhead which has a plurality of nozzles, firing chambers, and ink-feed channels is used to achieve this.

Commonly, each printhead has a number of firing devices. Each of the firing devices is associated with an ink firing chamber and a nozzle and has a propulsion device which causes expulsion of a droplet of ink from the firing chamber through the nozzle. Each of the ink firing chambers is also connected to a common ink source, typically by a channel or ink-feed-channel.

In thermal inkjet printheads, the propulsion device is a resistor which when activated provides a sufficiently high temperature to cause vaporization of a small volume of ink in the chamber thus creating a bubble of vapor in the firing chamber. The bubble expands and causes displacement of a droplet of ink through the nozzle, which is applied to the printable surface to produce the image or text characters.

By increasing the number of firing chambers provided in a printhead, the speed with which printing can occur can be increased. Increasing the number of firing chambers can also improve print quality. However, a channel or trench providing ink to these firing chambers must be able to accommodate the increase in printing throughput.

Methods exist for forming ink channels in printhead components. However, current thermal inkjet printhead microfabrication techniques have limitations. Although they exhibit relatively good width control in forming ink channels, existing channel formation methods have poor depth control, particularly when the device being fabricated is a multilayer device. This is because many existing methods are material specific and can only be used to form fluid channels in certain types of printhead substrates. Another limitation of existing microfabrication techniques is that they are not able to produce very small channels with finely controlled depth or surface roughness.

A popular method used to etch ink nozzles and fluid channels in thermal inkjet printheads involves chemical etching and reactive ion etching processes. These processes are selective to certain materials only. Therefore, a material which is particularly suitable for use in a thermally varying environment may be precluded from use in a thermal printhead component because it can not be etched using current etching techniques.

Laser ablation may also be used. However, the thermal effects of the laser processes currently used cause deterioration of the printhead component material being ablated which can affect the quality and accuracy of printheads. These thermal effects can also damage devices located around the area being ablated rendering the printhead component useless. Known laser ablation techniques also suffer from low resolution and depth control and produce rough ablated surfaces which can cause turbulent ink flow and reduce print quality.

Briefly, the present invention provides a method of forming a feature in a printhead component. Femtosecond laser beam pulses are scanned over a target zone of a printhead substrate to remove a layer of the printhead substrate. The scanning is repeated until a depth of printhead substrate has been removed from the target zone which corresponds to a desired feature depth. The removed portion of the printhead substrate forms at least part of the feature in the printhead component.

Other aspects and advantages of the present invention will become apparent from the following detailed description, taken in conjunction with the accompanying drawings, illustrating by way of example the principles of the invention.
Fig. 1 is a block diagram illustrating a method of forming a feature in a printhead component.
Fig. 2 illustrates use of femtosecond laser beam pulses to form a channel in a printhead substrate according to an embodiment of the present invention.
Figs. 3A and 3B illustrate a channel and a through hole respectively, formed in a printhead substrate according to an embodiment of the present invention.

The present invention relates to a method and system for forming features in a printhead component. The following description is presented to enable one of ordinary skill in the art to make and use the invention and is provided in the context of a patent application and its requirements. Various modifications to the embodiments and the generic principles and features described herein will be readily apparent to those skilled in the art. Thus, the present invention is not intended to be limited to the embodiment shown but is to be accorded the widest scope consistent with the principles and features described herein.

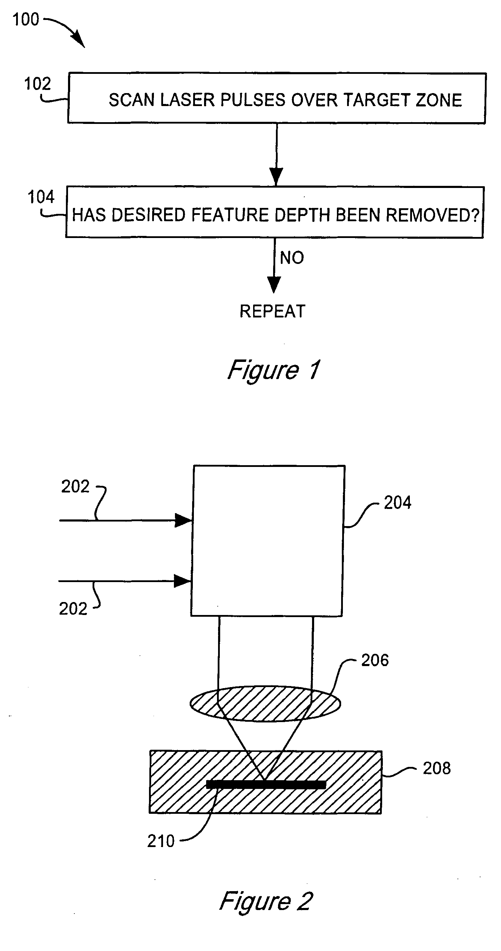

Fig. 1 represents an embodiment of the invention and is referred to herein by the general reference numeral 100. The method 100 includes in a first step 102, scanning femtosecond laser beam pulses over a target zone to remove a layer of printhead substrate. A final step 104 includes repeating the scanning step until a desired feature depth has been removed from the target zone. The removed portion of the printhead substrate forms at least part of the feature in the printhead component.

Fig. 2 shows a block diagram illustrating use of femtosecond laser beam pulses to form a feature such as a channel in a printhead component. A femtosecond laser beam generator (not shown) of the kind generally available generates incoming femtosecond laser beam pulses (hereinafter referred to as "femtosecond pulses") 202 having a pulse duration in the order of 10⁻¹⁵ seconds. The femtosecond pulses are focused directly onto a printhead substrate 208 through a beam scanner 204 and a projection lens 206. The beam scanner is programmed with the desired attributes of the feature to be formed in the printhead substrate 208 and scans the femtosecond pulses 202 over a target zone 210 on the printhead substrate 208 accordingly, thus directly forming an ablated area. That is, there is no mask involved in creating the feature in the printhead component.

The femtosecond pulses 202 remove a very small layer of material per pulse and per scanning pattern. Accordingly, the scanning pattern is repeated a number of times until a feature such as a channel having a desired depth is formed. A beam scanner or similar laser programming device is responsible for the formation of the desired shape and size of the features which are directly formed in the printhead substrate.

In an embodiment, the target zone is moved incrementally along the printhead substrate where the femtosecond pulses remove layers of the substrate by repeatedly scanning each target zone until the depth of the feature corresponds to the desired depth.

In some embodiments it is desirable to create a through hole in a printhead component to facilitate ink flow from a reservoir to a set of nozzles or other area of the printhead component. Accordingly, it may be desirable to follow the femtosecond process with a wet or chemical etching process which removes small regions of the substrate and, where the substrate is particularly thin, creates a through hole. This additional step may be desirable when the component is pre-coated with a thinfilm layer with microelectronic devices fabricated in it on the opposite side of the substrate. In such circumstances it may not be suitable to use laser pulses to form a through hole or channel directly.

Instead, the femtosecond laser ablation process in which a blind hole is created can be followed by a wet etching process where the substrate is dissolved when immersed in a chemical solution to complete a through hole without risking thermal damage to the nearby microelectronic devices. Suitable chemicals for use in wet etching the silicon substrate include tetra-methylammonium-hydroxide (TMAH) and potassium hydroxide (KOH). Dry etching may be used as an alternative to wet etching although it is a more expensive process. Suitable forms of dry etching include plasma reactive ion etching, sputter etching and ion milling.

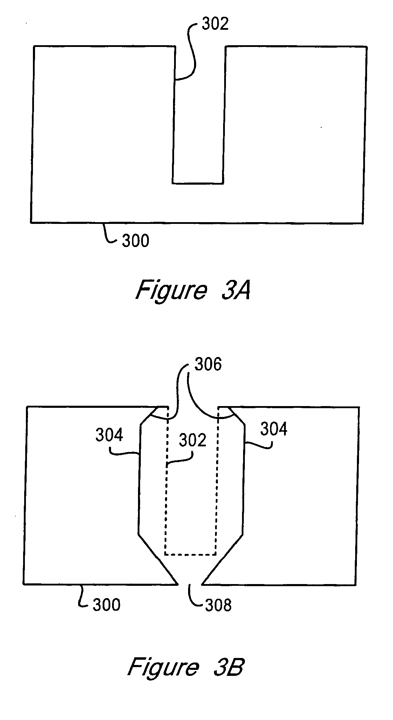

A wet etching process is illustrated in Figs 3A and 3B. Wet etching is a time consuming process. Therefore, to meet the throughput requirement for production, the thickness of the substrate membrane which remains after laser ablating should be as thin as can be achieved without resulting in punch through holes. Ideally this thickness may be 10 to 20 microns.

In Fig. 3A a trench 302 is formed in the substrate 300 of a printhead component using femtosecond pulses. The trench is then expanded using a chemical or wet etching process as illustrated in Fig 3B. Fig. 3B shows an outline, in broken lines, of the trench 302 of Fig. 3A which was formed by the femtosecond pulses. Trench 302 has been increased in size using the chemical/wet etching process to form a wider center region 304 and tapered portions 306.

This wet/chemical etching step also creates through hole 308 in the printhead substrate. This method improves upon prior art methods of creating ink channels with through holes by reducing the likelihood of accidentally punching through the printhead substrate before the wet/chemical etching process begins. It also provides higher ablation resolution and finer depth control.

Normally the printhead substrate into which the feature is formed is made of silicon. However, an advantage of the present embodiment is that it is material non-selective. Therefore, it can easily be used to remove layers of any material into which it may be desirable to form channels or other features. Moreover, unlike the prior art methods of chemical or ultra-violet etching, the substrate does not require any special preparation prior to being exposed to the femtosecond pulses. For some applications, it may be desirable for the substrate to undergo various processing or treatment prior to use of the femtosecond laser pulses to form certain features in the printhead component, but this is not a requirement of the above-described method.

Normally, the femtosecond laser pulses are focused to have a diameter of approximately 30µm. However, the beam spot can be made as small as 0.8µm. This provides a resolution which can be more finely controlled than prior art methods of channel formation for printhead components.

In an embodiment, the femtosecond laser pulse density is in the order of 10¹⁰Wcm⁻². By using such high intensity pulses, the interaction between the femtosecond pulses and the printhead material being treated is not affected by the laser wavelength as is the case for longer laser pulses used in the prior art. The amount of energy contained in each femtosecond pulse is limited by the ultra short laser pulses and if possible does not exceed 1 mJ. By limiting the amount of energy delivered per pulse, thermal effects caused by the laser process are limited, thus minimizing any heat-affected zone which may develop. This is achieved primarily because the pulses are of such short duration that heat carried by the pulses has insufficient time to diffuse to the surrounding area.

In accordance with varying embodiments, the increase in temperature of the material being treated using the inventive method is typically less than 10 degrees. Minimized thermal effects results in minimized thermally induced stress and minimized micro-cracks. Furthermore, by minimizing thermal effects, the recast layer is minimized along with material deformation. These features are important for maintaining the quality and longevity of printhead components. Other benefits are that there are no deleterious effects on the remaining areas of the printhead substrate and printhead component, and devices located around the target zone such as resistors and transistors are less likely to be damaged due to thermal effects of the channel forming process.

The amount of energy delivered per pulse can be defined using the parameter 'fluence'. Fluence can be defined as the single pulse energy divided by the area of the laser beam spot on the target zone. In an embodiment, the femtosecond pulse fluence is in the range of 5x10¹ J/cm² to 2x10² J/cm² although this value is approximate and suitable ranges are likely to differ for different printhead substrate materials. Another important parameter is pulse repetition rate which, together with the scanning speed of the laser beam, defines the volume removal rate or 'throughput' of the process. It is also directly related to the roughness of the surface of the feature which is formed. Ideally, the faster the pulse repetition rate, the better the throughput. One suitable pulse repetition rate is 1 kHz. This results in a relatively low scanning speed of approximately 20 mm/sec.

During the formation of the feature in the printhead component, parts of the substrate which are removed may form waste material such as vapor or plasma or a mix thereof, or melted substrate or liquid droplets, or solid particles which should be removed from the target zone and other parts of the printhead component. If these materials are not removed, they may accumulate in the form of a crater on the outside edges of the feature or within the feature being formed in the printhead component. In features such as channels or trenches which are relatively deep, these materials can build up inside the trench affecting the smoothness of the trench bottom. This can also slow the throughput of the femtosecond process. In one preferred embodiment, the materials are removed using a gas-assist method. In another preferred embodiment, the waste material is removed using a water-assist method.

In a gas-assist method, a gas which exhibits active reaction with the substrate material is delivered at high pressure to the laser ablation area on the substrate surface simultaneously with the femtosecond laser pulses. The gas could actively react with the substrate and/or the debris material and its high gas pressure removes the deposited material quickly contributing to significant improvements in throughput. For most effective use of the gas-assist process, the flow rate and the pressure of the gas in addition to the angle of the gas delivery nozzle and the distance between the nozzle and substrate should be monitored and controlled.

In a water-assist method, a thin layer (less 1 mm) of water film is formed in the ablation area. The water is delivered onto the substrate surface using an air-brush. The high energy femtosecond laser pulses penetrate the water layer with minimum energy loss and are fully absorbed by the substrate below it. The plasma generated from the high fluence laser pulse is then confined inside the water layer, and at the same time, shock waves generated from this interaction penetrate into the substrate. Meanwhile, as the water flows through the ablated area, the re-deposited debris is also removed quickly producing a high-quality ablated surface. Another advantage of the water-assist method is that it provides efficient cooling to the substrate. A combination of the above effects enhance the throughput improvement gained using the water-assist process and make it generally more efficient than the gas-assist process.

Advantageously, the inventive method provides precise control over the material layer being ablated or removed using the femtosecond pulses. This makes the inventive method particularly suitable for forming features such as blank micro-holes and channels in printhead components. Using the current method, one can achieve very fine control over the resolution and accuracy of features formed in the printhead component. Also, using the femtosecond pulses, one can ensure that a smooth surface is achieved at the bottom of the feature, thereby reducing the propensity of the printhead component to exhibit turbulent or inconsistent ink flow when in use or accidentally punch through thin channel or trench bottoms.

While some embodiments of the present invention have been illustrated here in detail, it should be apparent that modifications and adaptations to these embodiments may occur to one skilled in the art without departing from the scope of the present invention as set forth in the following claims.

## Claims

1. A method of forming a feature in a printhead component comprising:
scanning femtosecond laser beam pulses over a target zone to remove a layer of printhead substrate; and
repeating the scanning step until a depth of printhead substrate has been removed from the target zone which corresponds to a desired feature depth;
wherein the removed portion of the printhead substrate forms at least part of the feature in the printhead component.

2. A method of forming a feature in a printhead component according to claim 1 further comprising the step of enlarging the feature by:
moving the target zone relative to the printhead component; and
repeating the scanning step until a depth of the printhead substrate has been removed which corresponds to the desired feature depth.

3. A method of forming a feature in a printhead component according to claim 1 wherein the feature is a trench, the method further comprising the step of:
forming a through-hole in the feature using a chemical etching process.

4. A method of forming a feature in a printhead component according to claim 1 further comprising the step of:
clearing removed printhead substrate from the printhead component.

5. A method of forming a feature in a printhead component according to claim 4 wherein the step of clearing removed printhead substrate from the printhead component involves flushing the affected area with a gas.

6. A method of forming a feature in a printhead component according to claim 4 wherein the step of clearing removed printhead substrate from the printhead component involves flushing the affected area with water.

7. A method of forming a feature in a printhead component according to claim 1 wherein the feature is a blind hole and the printhead component has a remaining substrate thickness of 10 to 50µm.

8. A method of forming a feature in a printhead component according to claim 1 wherein the feature is a trench and the printhead component has a remaining substrate thickness of 10 to 50µm.

9. A method of forming a feature in a printhead component according to claim 7 wherein the blind hole has a surface roughness of less than 5µm RMS in a region where the substrate has been removed using the scanning femtosecond laser beam pulses.

10. A method of forming a feature in a printhead component according to claim 8 wherein the trench has a surface roughness of less than 5µm RMS in a region where the substrate has been removed using the scanning femtosecond laser beam pulses.

11. A printhead component having a feature formed according to the method of claim 1.

12. A system for forming a feature in a printhead component, comprising:
a femtosecond laser beam source;
a beam scanner, programmable with one or more desired attributes of the feature; and
a printhead component alignment device to align the printhead component with the femtosecond laser beam according to the desired attributes of the feature;
wherein the feature is formed by scanning femtosecond laser beam pulses over a printhead substrate to sequentially remove layers of the printhead substrate according to the desired attributes of the feature; and
wherein the removed portion of the printhead substrate forms the feature in the printhead component.
